# EUROPEAN PATENT APPLICATION

(11) **EP 4 752 533 A1**
(43) Date of publication of application: **03.06.2026**
(21) Application number: 24844820.1
(22) Date of filing: 25.07.2024
(51) Int. Cl.: G01N 21/64, G01N 21/01, G01N 1/28

(54) **SUPER-RESOLUTION LIGHT-SHEET FLUORESCENCE MICROSCOPY SYSTEM AND METHOD**

(30) Priority: 25.07.2023 CN 202310916353
(71) Applicant: Institute of Biophysics Chinese Academy of Sciences, Chaoyang District Beijing 100101 (CN)
(72) Inventor: LI, Dong, Beijing 100101 (CN); DONG, Xue, Beijing 100101 (CN); YANG, Xiaoyu, Beijing 100101 (CN)
(74) Representative: Petraz, Gilberto Luigi
(86) International application number: PCT/CN2024/107429
(87) International publication number: WO 2025/021132

(57) **Abstract**

A super-resolution light-sheet fluorescence microscopy method, comprising: using reversibly photoswitchable fluorescent proteins (RSFPs) to process a biological sample (1000) to be tested; using a light sheet as activation light to be incident onto said biological sample (1000), so as to generate an activated portion in the reversibly photoswitchable fluorescent proteins (RSFPs); using modulated striped structured light as excitation light to be incident onto the activated portion of the reversibly photoswitchable fluorescent proteins (RSFPs) towards a surface where the activated portion is located, such that the activated portion of the reversibly photoswitchable fluorescent proteins (RSFPs) on a plane where the light sheet is incident emits fluorescence, wherein the activation light and the excitation light have different wavelengths; and collecting a fluorescence image with structured light stripe information as a two-dimensional fluorescence image for super-resolution image processing. Further provided is a super-resolution light-sheet fluorescence microscopy system.

## Description

### FIELD

The present disclosure generally relates to the field of super-resolution microscopic imaging technologies, and more particularly to two-dimensional or three-dimensional super-resolution light-sheet fluorescence microscopy imaging systems and methods.

### BACKGROUND

In recent years, the demand for high spatiotemporal resolution three-dimensional imaging technology in life science research has been growing rapidly. Achieving high-resolution, high-speed, low-damage and long-term three-dimensional imaging of microscopic life activities holds significant practical importance and broad application prospects for exploring a mechanism of life activities and understanding physiological and pathological information.

Optical fluorescence microscopic imaging technology, as an important observation method, provides strong support for the development of life science research. Among optical fluorescence microscopic imaging technologies, light-sheet fluorescence microscopy (LSFM) has gained significant popularity in the field of three-dimensional imaging in recent years. Unlike traditional three-dimensional imaging technologies (e.g., laser scanning confocal microscopy, multiphoton fluorescence microscopy imaging technology), LSFM utilizes a thin light sheet for planar excitation and performs detection in a direction perpendicular to the light sheet. This planar excitation imaging is faster than traditional point-scanning imaging. By integrating a high-precision device such as a high-speed scanning galvanometer and a piezoelectric displacement stage, rapid three-dimensional volumetric imaging may be achieved.

However, the LSFM itself is limited in imaging resolution and is difficult to be compatible with super-resolution microscopy technology. This is mainly due to the following reasons. (1) In a light-sheet fluorescence microscopy imaging system, a physical arrangement of an excitation objective lens and an detection objective lens being perpendicular to each other requires the detection objective lens to have a long working distance for imaging, which limits a selection range of a numerical aperture (NA) of the detection objective lens, which results in the necessity of selecting a detection objective lens with a relatively low NA as the detection objective lens of the light-sheet fluorescence microscopy imaging system, consequently affecting a two-dimensional resolution of a final fluorescence image and making it be lower than a two-dimensional resolution of an image achieved by traditional confocal microscopy imaging. For example, a lateral resolution of a light-sheet fluorescence microscope is 350-500 nanometers, while a lateral resolution of a confocal microscope may reach 200 nanometers; (2) In traditional LSFM, an imaging field of view and an axial resolution of three-dimensional imaging are mutually constrained. To achieve uniform light-sheet illumination over a large area, an objective lens with a smaller NA needs to be used to generate the light sheet, which, However, results in a thicker light sheet, and a background signal in the final fluorescence image is undesirably enhanced, thereby reducing the axial resolution of subsequent three-dimensional imaging. Additionally, if structured illumination microscopy (SIM) is directly applied in the traditional light-sheet fluorescence microscopy imaging technology, only the lateral resolution in a single direction of the final two-dimensional fluorescence image may be improved. To achieve isotropic lateral resolution improvement (i.e., two-dimensional resolution enhancement), a direction of a structured illumination fringe needs to be changed. This is difficult to implement in a traditional light-sheet fluorescence microscopy system where the excitation objective lens and the detection objective lens are perpendicular to each other.

### SUMMARY

The present disclosure aims to propose a novel super-resolution light-sheet fluorescence microscopy imaging system, which is capable of overcoming the aforementioned shortcomings of a traditional light-sheet microscopy imaging system, achieves super-resolution microscopic imaging, and may efficiently enhance both a two-dimensional resolution and a three-dimensional resolution of an obtained fluorescence image.

According to an aspect of the present disclosure, a super-resolution light-sheet fluorescence microscopy imaging method is provided, which includes: treating a biological sample to be tested with a reversibly photoswitchable fluorescent protein; causing a light sheet as an activation light plane to be incident on the biological sample to be tested in a planar manner, so as to generate an activated portion in the reversibly photoswitchable fluorescent protein of the biological sample to be tested; causing modulated fringe structured light as excitation light to be incident on the activated portion of the reversibly photoswitchable fluorescent protein towards a plane where the activated portion is located, so that the activated portion of the reversibly photoswitchable fluorescent protein emits fluorescence on a plane where the light sheet is incident, wherein the activation light and the excitation light have different wavelengths; and acquiring a fluorescence image carrying structured light fringe information as a two-dimensional fluorescence image for super-resolution image processing.

Optionally, when a linear super-resolution reconstruction algorithm is to be configured for super-resolution image reconstruction, for each portion of the reversibly photoswitchable fluorescent protein to be activated illuminated by the incident activation light sheet, the activation light sheet is first incident, and then the modulated fringe structured light is incident N*M times, wherein N and M are integers greater than or equal to 3; and the modulated fringe structured light incident each time differs from one another by 180/M degrees in fringe directions when viewed in a plane where the light sheet is located and by 2π/N in fringe phases.

Optionally, after the modulated fringe structured light is incident as the excitation light onto the activated portion of the reversibly photoswitchable fluorescent protein each time, fringe structured light having a same direction but a phase difference of π relative to the incident modulated fringe structured light is incident as the excitation light onto the activated portion of the reversibly photoswitchable fluorescent protein.

Optionally, when a nonlinear super-resolution reconstruction algorithm is to be configured for super-resolution image reconstruction, N and M are greater than or equal to 5.

Optionally, the light sheet is formed by dithering a single Bessel beam or a multi-beam interference lattice.

Optionally, the light sheet is generated using a near-infrared wavelength single Bessel beam is used as the activation light, and is incident on the biological sample in a manner that induces a two-photon effect in the reversibly photoswitchable fluorescent protein.

Optionally, after the light sheet as the activation light has been incident on the biological sample and before the fringe structured light as the excitation light is incident on the activated portion of the reversibly photoswitchable fluorescent protein, a light sheet for thinning formed by light having an excitation light wavelength is configured to illuminate both sides of the activated portion in a partially overlapping manner, so as to reduce a thickness of the activated portion.

Optionally, a relative position between the light sheet as the activation light and the biological sample is changed at least in a direction perpendicular to a plane where the light sheet is located, the modulated fringe structured light as the excitation light is incident on the activated portion of the reversibly photoswitchable fluorescent protein to excite fluorescence, and a fluorescence image carrying structured light fringe information is acquired as a three-dimensional fluorescence image stack for super-resolution image processing.

Optionally, the change in the relative position between the light sheet and the biological sample is achieved by moving the light sheet itself or by moving the biological sample.

According to another aspect of the present disclosure, a super-resolution light-sheet fluorescence microscopy imaging system is provided, which includes: a light source module; a laser gating and beam-splitting module; a first light-sheet generation module; a light-sheet scanning module; an activation objective lens; a structured light generation and polarization modulation module; a detection objective lens; a fluorescence detection module; and a sample placement and movement module, in which the first light-sheet generation module, the light-sheet scanning module, and the activation objective lens form a first light-sheet activation optical path; the structured light generation and polarization modulation module, the fluorescence detection module, and the detection objective lens form a structured light excitation and detection optical path; and the laser gating and beam-splitting module is configured to selectively direct a laser beam emitted from the light source module into the first light-sheet activation optical path or the structured light excitation and detection optical path; the first light-sheet activation optical path is configured to generate a light sheet as activation light incident on a biological sample to be tested treated with a reversibly photoswitchable fluorescent protein, so as to create an activated portion in the reversibly photoswitchable fluorescent protein; the structured light excitation and detection optical path is configured to generate modulated fringe structured light as excitation light incident on the activated portion of the reversibly photoswitchable fluorescent protein, so that the activated portion of the reversibly photoswitchable fluorescent protein emits fluorescence on a plane where the light sheet is incident, wherein the activation light and the excitation light have different wavelengths; and the structured light excitation and detection optical path is further configured to acquire a fluorescence image carrying structured light fringe information as a two-dimensional fluorescence image for super-resolution image processing.

Optionally, the first light-sheet generation module includes a first galvanometer, and the light sheet is formed by dithering a single Bessel beam or a multi-beam interference lattice via the first galvanometer.

Optionally, the system further includes: a second light-sheet generation module capable of emitting a laser beam independently of the light source module.

The second light-sheet generation module, the first galvanometer of the first light-sheet generation module, the light-sheet scanning module, and the activation objective form a second light-sheet activation optical path.

The second light-sheet generation module includes: a laser capable of generating near-infrared wavelength laser light independently of the light source module; a pair of lenses located downstream of the laser; and a sub-module consisting of an axicon and a lens or an annular mask, in which the sub-module or the annular mask is located downstream of the pair of lenses and configured so that after the laser emits near-infrared wavelength laser light, the near-infrared wavelength laser light is first collimated and expanded by the pair of lenses and then passes through the sub-module or the annular mask to produce an annular beam, and the annular beam forms a single Bessel beam after passing through the activation objective, while the single Bessel beam generates a light sheet via dithering of a first galvanometer of the first light-sheet generation module as the activation light incident on the biological sample in a manner that induces a two-photon effect in the reversibly photoswitchable fluorescent protein.

Optionally, after the light sheet as the activation light has been incident on the biological sample and before the fringe structured light as the excitation light is incident on the activated portion of the reversibly photoswitchable fluorescent protein, a light sheet for thinning formed by light with an excitation light wavelength is configured to illuminate both sides of the activated portion in a partially overlapping manner, so as to reduce a thickness of the activated portion.

Optionally, a relative position between the light sheet as the activation light and the biological sample is changed at least along an optical axis of the detection objective, the modulated fringe structured light as the excitation light is incident on the activated portion of the reversibly photoswitchable fluorescent protein to excite fluorescence, and a fluorescence image carrying structured light fringe information is acquired as a three-dimensional fluorescence image stack for super-resolution image processing.

Optionally, the light-sheet scanning module is configured to shift only the light sheet as the activation light and move the detection objective synchronously along the optical axis, or to move only the sample placement and movement module, so as to change the relative position between the light sheet and the biological sample at least along the optical axis of the detection objective.

By adopting the above technical means of the present disclosure, the two-dimensional fluorescence image or the three-dimensional fluorescence image stack conducive to achieving super-resolution microscopic imaging may be obtained. During the excitation and detection of the two-dimensional fluorescence image, a multi-direction and multi-phase excitation mode of structured light fringes is adopted, which results in a significant improvement in an isotropic lateral resolution of the super-resolution image obtained after super-resolution reconstruction of the finally obtained two-dimensional fluorescence image. Simultaneously, by using the method for thinning the thickness of the activated portion, a z-axis resolution of the three-dimensional fluorescence image stack may also be significantly enhanced. Furthermore, adopting the technical means of the present disclosure, selecting a near-infrared wavelength activation light sheet greatly increases a penetration depth into biological tissues and reduces damage to biological tissues, which facilitates two-dimensional or three-dimensional observation of biological tissues.

### BRIEF DESCRIPTION OF THE DRAWINGS

A more comprehensive understanding of the principles and various aspects of the present disclosure may be gained from the following detailed description in conjunction with the accompanying drawings. It should be noted that the scales in various accompanying drawings may vary for the purpose of clarity, but this does not affect the understanding of the present disclosure. In the accompanying drawings:
FIG. 1 schematically shows a block diagram of a super-resolution light-sheet microscopy imaging system according to an embodiment of the present disclosure.
FIG. 2 schematically shows an optical path diagram of a super-resolution light-sheet microscopy imaging system corresponding to FIG. 1 according to an embodiment of the present disclosure.
FIG. 3 schematically shows an optical path diagram of an example of a light source module of a super-resolution light-sheet microscopy imaging system according to the present disclosure.
FIG. 4 schematically shows an optical path diagram of a second light-sheet generation module according to an embodiment of the present disclosure.
FIG. 5 schematically shows a schematic diagram of performing super-resolution light-sheet fluorescence microscopy imaging on a biological sample according to an embodiment of the present disclosure, in which an obtained fluorescence image will undergo super-resolution image reconstruction using a linear super-resolution reconstruction algorithm.
FIGS. 6A, 6B, and 6C schematically show frequency domain expansion comparison diagrams of traditional wide-field illumination versus a structured illumination light as an excitation light in a super-resolution light-sheet fluorescence microscopy imaging method according to an embodiment of the present disclosure.
FIG. 7 schematically shows a schematic diagram of performing super-resolution light-sheet fluorescence microscopy imaging on a biological sample according to another embodiment of the present disclosure, in which an obtained fluorescence image will undergo super-resolution image reconstruction using a nonlinear super-resolution reconstruction algorithm.
FIGS. 8A, 8B, and 8C schematically show frequency domain expansion comparison diagrams of traditional wide-field illumination versus a structured illumination light as an excitation light in a super-resolution light-sheet fluorescence microscopy imaging method according to an embodiment of the present disclosure.
FIG. 9 schematically shows a schematic diagram of a method for thinning an activated portion of a reversibly photoswitchable fluorescent protein by using a light sheet for thinning according to an embodiment of the present disclosure.

### DETAILED DESCRIPTION

In various accompanying drawings of the present disclosure, features with identical structures or similar functions are denoted by the same reference signs.

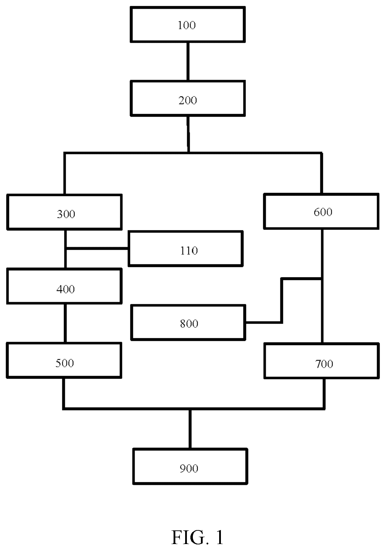

FIG. 1 schematically shows a block diagram of a super-resolution light-sheet microscopy imaging system according to an embodiment of the present disclosure. The super-resolution light-sheet microscopy imaging system generally includes a light source module 100, a laser gating and beam splitting module 200, a first light-sheet generation module 300, a second light-sheet generation module 110 capable of emitting a laser beam independently of the light source module 100, a light-sheet scanning module 400, an activation objective lens 500, a structured light generation and polarization modulation module 600, a detection objective lens 700, a fluorescence detection module 800, and a sample placement and movement module 900.

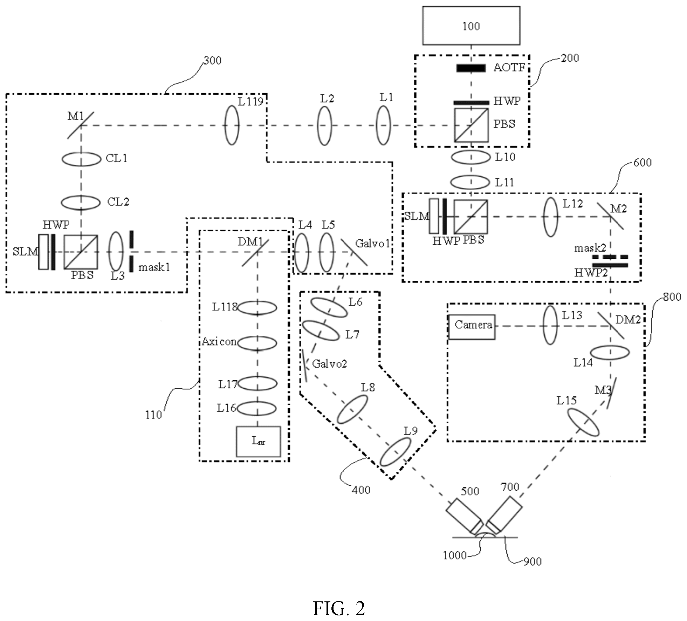

FIG. 2 schematically shows an optical path diagram of a super-resolution light-sheet microscopy imaging system corresponding to FIG. 1 according to an embodiment of the present disclosure. In this optical path diagram, the sample placement and movement module 900 and a biological sample 1000 placed on the sample placement and movement module 900 are showed in a simplified manner.

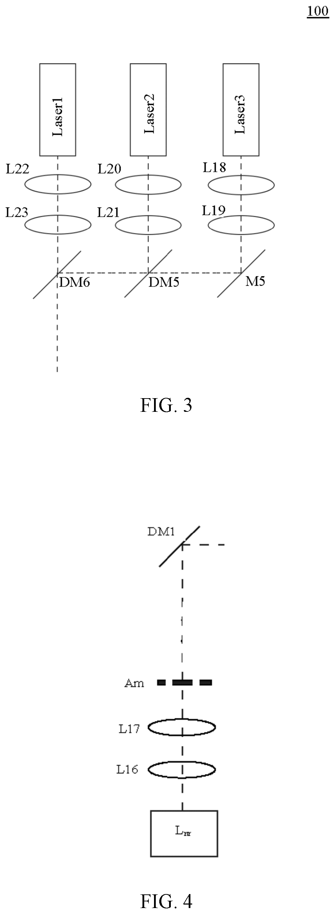

The light source module 100 is configured to emit a collimated laser beam of different wavelengths. For example, FIG. 3 schematically shows an optical path diagram of the light source module 100 according to an embodiment of the present disclosure. The light source module 100 may include a plurality of lasers, for example, it is shown to include three lasers denoted as Laser1, Laser2, Laser3, which may emit laser beams of different wavelengths, such as 405 nm, 445 nm, and 488 nm wavelengths, respectively. In an alternative embodiment, the light source module 100 may include more lasers, thus enabling them to emit laser beams of more wavelengths, such as 405 nm, 445 nm, 488 nm, 561 nm, 590 nm, etc.

In an illustrated example, a set of lenses denoted as L18, L19 and a set of lenses denoted as L20, L21 and a set of lenses denoted as L22, L23 are provided for Laser1, Laser2 and Laser3, respectively, so that laser beams emitted from the Laser1, Laser2, Laser3 are expanded and collimated into parallel light of equal diameter via their corresponding set of lenses, and a mirror denoted as M5 and dichroic mirrors denoted as DM5, DM6 combine three beams of the parallel light of equal diameter from different Laser1, Laser2 and Laser3 into a single laser beam as a laser beam output of the light source module 100.

As shown in the figures, the laser gating and beam splitting module 200 according to the present disclosure mainly includes an acousto-optic tunable filter (denoted as AOTF), a half wave plate (denoted as HWP), and a polarizing beam splitter (denoted as PBS). The AOTF, the HWP and the PBS are sequentially arranged in an optical path of the laser beam output from the light source module 100, so that the laser beam output from the light source module 100 may be incident into the AOTF at an appropriate angle and an appropriate direction. The AOTF is configured to selectively allow light of a specific wavelength to pass through and may control an output optical power. Therefore, in embodiments of the present disclosure, since the laser beam contains lasers of different wavelengths, and after the laser beam passes through the AOTF, it may ensure that a laser of a specific wavelength may be output as needed. In this way, the laser of the specific wavelength, after being adjusted by the HWP, is split by the PBS and enters respectively a first light-sheet activation optical path composed of the first light-sheet generation module 300, the light-sheet scanning module 400 and the activation objective lens 500, and a structured light excitation and detection optical path composed of the structured light generation and polarization modulation module 600, the detection objective lens 700 and the fluorescence detection module 800.

It should be noted that the control of optical components such as the AOTF in the super-resolution light-sheet microscopy imaging system described in the present disclosure may be implemented via a computer in any suitable manner familiar to those skilled in the art, which will not be elaborated here.

As shown in the figures, the light-sheet generation module 300 mainly includes a lens denoted as L119, cylindrical lenses denoted as CL1, CL2, a polarizing beam splitter (denoted as PBS), a spatial light modulator (denoted as SLM), a half-wave plate (denoted as HWP), and an annular mask denoted as mask1. In the description of the optical path diagrams of the present disclosure, explanations for lenses such as lenses denoted as L1, L2, L3, L4, L5, L6, L7, L8, L9, L10, L11, L12, L13, L14, L15, L17, L18, L19, L20, L21, L22, L23, L119, etc., and mirrors such as mirrors denoted as M1, M2, M3, although they are also necessary components of the optical system of the present disclosure, will be omitted herein as those skilled in the art may understand their conventional configurations and functions when observing the optical path diagrams. For example, when a lens mentioned below is understood as serving a relay function with reference to the figures, those skilled in the art should understand that the number of lenses may be increased or decreased as needed, and explanations for these relay lenses are omitted.

The lens denoted as L119 and the two cylindrical lenses denoted as CL1, CL2 are configured to stretch parallel light from the laser gating and beam splitting module 200 in two mutually perpendicular directions, so that the light exiting from the cylindrical lens CL2 becomes rectangular parallel light. Therefore, it may be considered that the lens L119 and the two cylindrical lenses CL1, CL2 form a subsystem that changes a circular beam into the rectangular parallel light. Those skilled in the art should understand that any other suitable beam expansion optical system capable of stretching parallel light in two-dimensional directions may be adopted in the technical solution of the present disclosure as a beam expansion subsystem.

In the first light-sheet activation optical path, the spatial light modulator (denoted as SLM) in the light-sheet generation module 300 may be a binary spatial light modulator. For example, the spatial light modulator SLM may include a liquid crystal panel composed of a plurality of liquid crystal pixels, each pixel may be in either on state or off state, so that under the control of a computer, each pixel on the spatial light modulator SLM changes state through program control, and different diffraction patterns are generated by designing corresponding algorithms (i.e., patterns formed by changing the on or off state of the computer-controlled liquid crystal pixels on the SLM). Thus, after light is incident on the SLM and passes through lens L3 and the annular mask denoted as mask1, an annular beam is generated. In an alternative embodiment, the patterns may also be generated using other suitable optical devices such as a digital micromirror device (denoted as DMD).

This annular mask mask1 is engraved with concentric annular apertures of different inner and outer diameters. The annular mask mask1 is arranged to be conjugate with a back pupil of the activation objective lens 500 after passing through three sets of relay lenses denoted as L4, L5, L6, L7, L8, L9, and the annular apertures with different inner and outer diameters of the annular mask mask1 correspond to the generation of annular light beams with different numerical apertures at the back pupil of the activation objective lens 500. Consequently, at a focal plane of the activation objective lens 500, different lattice beams or single Bessel beams are generated. The annular mask mask1 is placed at a focus point of the beam, and a center of the annular apertures of the annular mask mask1 is located on an optical axis.

As shown in the figures, the light-sheet generation module 300 further includes a first galvanometer denoted as Galvo1 and lenses denoted as L4, L5. The first galvanometer Galvo1 is arranged in a conjugate relationship with the annular mask mask1, and the lenses L4, L5 are arranged between the first galvanometer Galvo1 and the annular mask mask1 in a manner to form a 4F system. Those skilled in the art, when reading the content in this specification involving any related optical terms such as "galvanometer (or laser galvanometer)", "conjugate", "4F", etc., or their working principles, may refer to any publicly known technical materials in the field, including technical dictionaries, manuals, and textbooks.

As shown in the figures, the light-sheet scanning module 400 includes a second galvanometer denoted as Galvo2, and lenses denoted as L6, L7, L8, L9. The first galvanometer denoted as G1 and the second galvanometer denoted as G2 are also arranged in a conjugate relationship. The lenses L6, L7 are arranged between the first galvanometer G1 and the second galvanometer G2 in a manner forming a 4F system. Additionally, the second galvanometer G2 and the back pupil of the activation objective lens 500 are also arranged in a conjugate relationship. The lenses L8, L9 are arranged between the second galvanometer G2 and the back pupil of the activation objective lens 500 in a manner forming a 4F system.

The technical solution of the present disclosure generates a light sheet by dithering a single Bessel beam or multi-beam interference lattice. For example, the first galvanometer Galvo1 of the light-sheet generation module 300 is configured to rotate about an axis as needed, and/or the second galvanometer Galvo2 of the light-sheet scanning module 400 is also configured to rotate about an axis as needed. For example, the first galvanometer Galvo1 is driven by a computer-controlled motor (not shown) to rotate by a corresponding angle about an axis. For example, when only the first galvanometer Galvo1 rotates forward and backward about an axis, by dithering the first galvanometer Galvo1 (i.e., rotating in both forward and reverse directions about an axis), the single Bessel beam or the multi-beam interference lattice moves along an x-axis to generate a light sheet parallel to an xy-plane, also referred to as a "virtual light sheet". Compared with the traditional method of generating a light sheet using only cylindrical lenses, the light sheet generated by dithering the single Bessel beam or the multi-beam interference lattice in the present disclosure is thinner, which results in a higher z-axis resolution in a three-dimensional fluorescence image stack.

In an alternative embodiment, a light sheet may also be generated using the optical characteristic of cylindrical lenses acting on light in one dimension.

The light sheet may be incident onto the biological sample placed on the sample placement and movement module 900 via an objective lens (in the technical solution of the present disclosure, via the activation objective lens 500). If necessary, the second galvanometer Galvo2 may be rotated to allow the light sheet to move along an optical axis of the detection objective lens 700, while the detection objective lens 700 correspondingly moves synchronously along its optical axis (i.e., a z-axis) to ensure real-time focusing. In an alternative embodiment, the light sheet may be kept stationary while only the sample placement and movement module 900 is translated, so that although the light sheet is stationary, a relative position between the sample and the light sheet changes at least along the optical axis of the detection objective lens 700.

As shown in the figures, the second light-sheet generation module 110 mainly includes a laser denoted as Lₙᵣ capable of generating near-infrared wavelength laser light independently of the light source module 100, a pair of lenses denoted as L16 and L17 arranged downstream of the laser Lₙᵣ; an axicon denoted as Axicon located downstream of the pair of lenses L16 and L17, and a lens denoted as L118 and a dichroic mirror denoted as DM1 sequentially arranged downstream of the axicon Axicon. The dichroic mirror DM1 is arranged in an optical path between the mask mask1 of the light-sheet generation module 300 and the first galvanometer Galvo 1, so that a light beam from the lens L3 may directly pass through the dichroic mirror DM1 after passing through the mask mask1, but a light beam from the lens L118 is reflected by the dichroic mirror DM1 towards the lens L4 and continues to propagate.

The laser Lₙᵣ is arranged independently of the light source module 100. When a laser beam generated by the laser Lₙᵣ and collimated and expanded by the lenses L16 and L17 passes through the axicon Axicon and then through the lens L118, a parallel annular beam may be generated. This parallel annular beam, after passing through the lenses L4, L5 and the first galvanometer Galvo1 of the light-sheet generation module 300 and the light-sheet scanning module 400, may be emitted from the activation objective lens 500 as a Bessel beam due to a conjugate design of a back focal plane of the axicon Axicon and the focal plane of the activation objective lens 500.

FIG. 4 schematically shows an optical path diagram of a second light-sheet generation module 110 according to another embodiment of the present disclosure. This second light-sheet generation module 110 differs from the second light-sheet generation module shown in FIG. 2 in that the axicon Axicon and the lens L118 are replaced by an annular mask denoted as Am, so that a collimated near-infrared wavelength laser beam, after passing through the annular mask Am, may directly generate a parallel annular beam. This parallel annular beam, after passing through the lenses L4, L5 and the first galvanometer Galvo1 of the light-sheet generation module 300 and the light-sheet scanning module 400, may be emitted from the activation objective lens 500 as a Bessel beam.

Therefore, it may be considered that the second light-sheet generation module 110, the first galvanometer Galvo1 of the light-sheet generation module 300, the light-sheet scanning module 400, and the activation objective lens 500 form a second light-sheet activation optical path. Although the second light-sheet activation optical path partially overlaps with the first light-sheet activation optical path in terms of constituent optical components, the two optical paths may only operate in an alternative manner, i.e., generating an activation light sheet.

As shown in the figures, the structured light generation and polarization modulation module 600 mainly includes a spatial light modulator (denoted as SLM), a half-wave plate (denoted as HWP), a polarizing beam splitter (denoted as PBS), a mask denoted as mask2, and a half-wave plate denoted as HWP2 located downstream of the mask mask2. Those skilled in the art should understand that the spatial light modulator SLM may also be replaced by other suitable optical devices such as a digital micromirror device (denoted as DMD).

According to the technical solution of the present disclosure, the spatial light modulator SLM of the light-sheet generation module 300 and/or the spatial light modulator SLM of the structured light generation and polarization modulation module 600 may be configured to control on/off states of the first light-sheet activation optical path and/or the structured light excitation and detection optical path as needed, i.e., by controlling the corresponding spatial light modulator SLM to load respective patterns to control whether the laser beam may exit from the spatial light modulator SLM and pass through the masks mask1 and mask2 to the downstream of the optical path.

Furthermore, in an illustrated example, the spatial light modulator SLM of the structured light generation and polarization modulation module 600 may be a binary spatial light modulator, and the half-wave plate HWP of the structured light generation and polarization modulation module 600 may be an achromatic half-wave plate. The spatial light modulator SLM, the half-wave plate HWP, and the polarizing beam splitter prism PBS may form a phase grating. After a parallel light is reflected by the polarizing beam splitter prism PBS, a polarization direction of a linearly polarized light is rotated by π/8 by the half-wave plate HWP before being incident on the spatial light modulator SLM. For example, the spatial light modulator SLM may include a liquid crystal panel composed of a plurality of liquid crystal pixels, each pixel may be in either on or off state, so that under the control of a computer, each pixel on the spatial light modulator SLM changes state through program control, which may allow a polarization direction of the incident light to be left-rotated or right-rotated by π/4. The light then passes through the half-wave plate HWP again and is rotated by another π/8. Polarization states of the two types of linearly polarized light reflected from the spatial light modulator SLM form an angle of ±45° with an output polarization direction of the polarizing beam splitter prism PBS, respectively. Finally, after being reflected by the polarizing beam splitter prism PBS, the pixels corresponding to the on and off states on the spatial light modulator SLM are modulated to have a phase difference of π. For the above reasons, the spatial light modulator SLM, the half-wave plate HWP, and the polarizing beam splitter prism PBS constitute a phase grating. By designing algorithms to generate different diffraction patterns (i.e., patterns formed by changing the on or off state of the computer-controlled liquid crystal pixels on the spatial light modulator SLM), desired sinusoidal or cosine structured light fringes with the different directions and different phases may be generated at the biological sample.

Additionally, the mask mask2 is arranged at a focus point of the beam, and is configured to retain only positive and negative (i.e., ±) first-order light components and filter out other orders of light components. Unlike the mask mask1, the mask mask2 for example may be configured with a plurality of through-holes distributed around a center concentric with the optical axis, such as 6 through-holes or 10 through-holes. These through-holes are uniformly spaced circumferentially and are grouped in pairs aligned radially. When the laser beam in the structured light excitation and detection optical path passes through the aforementioned phase grating, two laser beams are generated that may pass through one group of through-holes among these groups of through-holes. These two laser beams, after passing through the half-wave plate HWP2, exit from the detection objective lens 700 to form two light spots, which are incident onto a plane where a portion activated by the activation light sheet is located and interfere with each other to generate fringe structured light.

For example, the half-wave plate denoted as HWP2 located downstream of the mask mask2 may be divided into a plurality of (e.g., six or ten, etc.) areas. These areas are symmetrically distributed, and fast axis directions of liquid crystal molecules in a single area are consistent, but principal optical axes of each area are different. This regionally designed half-wave plate HWP2 may allow a polarization direction of linearly polarized light incident from different areas to be changed differently, so that the entire half-wave plate HWP2 has a same λ/2 retardation. These areas correspond to the respective group of through-holes of the mask mask2, respectively, so that the polarization direction of the two beams passing through any group of through-holes, after passing through the half-wave plate HWP2, a dichroic mirror denoted as DM2, lenses denoted as L14 and L15, and the detection objective lens 700, is perpendicular to a connecting-line direction of the two light spots illuminated by the detection objective lens 700, thus achieving a highest efficiency fringe modulation on a surface of the biological sample 1000. Those skilled in the art should understand that other optical modules capable of generating modulated fringe structured light may also be used as the structured light generation and polarization modulation module 600 in the technical solution of the present disclosure.

As shown in the figures, the fluorescence detection module 800 mainly includes a dichroic mirror denoted as DM2, a camera denoted as Camera, and a mirror denoted as M3. According to the technical solution of the present disclosure, after a modulated structured light fringe output from the structured light generation and polarization modulation module 600 is illuminated onto a surface of the biological sample via the detection objective lens 700, fluorescence is excited, the fluorescence is then collected by the same detection objective lens 700, passes through the lens L15, the mirror M3, the lens L14, the dichroic mirror DM2, and the lens L13 before entering the camera Camera, thus obtaining a fluorescence image containing structured light fringe information. By using a structured light super-resolution reconstruction algorithm to perform reconstruction on the collected image, a super-resolution image may be obtained.

Based on acquiring a two-dimensional fluorescence image containing structured light fringe information, a two-dimensional super-resolution image may be reconstructed via a structured light two-dimensional super-resolution reconstruction algorithm; and after acquiring a three-dimensional fluorescence image stack, a super-resolution image stack may be reconstructed through a reconstruction algorithm. Those skilled in the art should understand that the super-resolution reconstruction algorithm may be implemented using any reconstruction method well-known in the field of microscopic image processing technology. For example, commercial software such as Matlab may be used for image reconstruction, and commercial interactive microscopic image analysis software such as Imaris or Amira may be used for image display and analysis on a computer, which are therefore not within the scope of this discussion. One of the main objectives of the super-resolution light-sheet fluorescence microscopy imaging system of the present disclosure is to obtain the fluorescence image (the two-dimensional fluorescence image or the three-dimensional fluorescence image stack) that may be configured for super-resolution reconstruction.

The present disclosure proposes the introduction of a reversibly photoswitchable fluorescent protein (known and abbreviated as RSFP) into the biological sample to be observed, thereby achieving super-resolution light-sheet fluorescence microscopy imaging. The introduction of the reversibly photoswitchable fluorescent protein RSFP into the biological sample may be achieved using any suitable method well-known in the field, such as transfection. The RSFP is one type of fluorescent protein that may only be excited to produce fluorescence after being activated. For example, the reversibly photoswitchable fluorescent protein RSFP may be activated under irradiation with activation light of a first wavelength (also referred to as an activation wavelength) and transition to an activated state. Then, upon irradiation with excitation light of a second wavelength (also referred to as an excitation wavelength) different from the first wavelength, the reversibly photoswitchable fluorescent protein RSFP is excited to produce fluorescence, and transition to a bright state. After emitting fluorescence, the reversibly photoswitchable fluorescent protein RSFP immediately transitions back to a non-activated state, i.e., a dark state. In the dark state, even if the reversibly photoswitchable fluorescent protein RSFP is exposed to light of a non-activation wavelength, they will not be excited to produce fluorescence. When illuminated again with activation light of the activation wavelength, the reversibly photoswitchable fluorescent protein RSFP may return to the activated state, which waits to be excited by excitation light of the excitation wavelength to produce fluorescence and return to the bright state.

Depending on the differences in the physical or chemical properties of the reversibly photoswitchable fluorescent protein RSFP, the activation wavelength or the excitation wavelength may vary for different types of reversibly photoswitchable fluorescent protein RSFP. In embodiments described in the present disclosure, the activation wavelength of the activation light for the selected reversibly photoswitchable fluorescent protein RSFP is schematically selected as 405 nm, and the excitation wavelength of the excitation light is schematically selected as 488 nm.

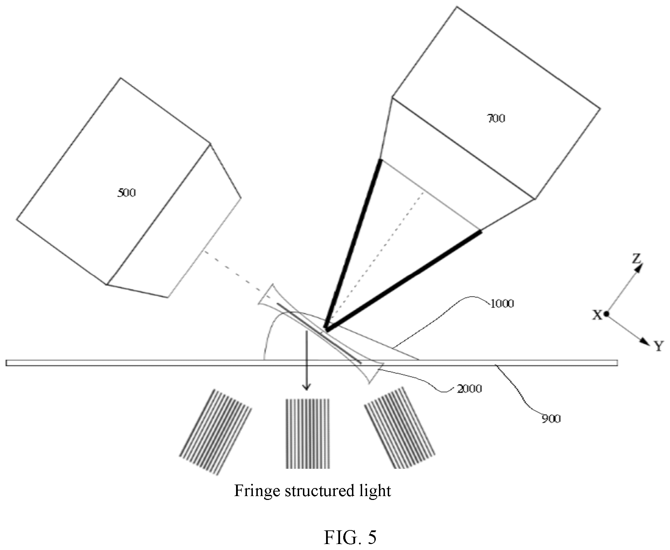

FIG. 5 schematically shows a schematic diagram of performing super-resolution light-sheet fluorescence microscopy imaging on a biological sample according to an embodiment of the present disclosure. This method may be implemented using the super-resolution light-sheet fluorescence microscopy imaging system described above.

As shown in the figures, the biological sample 1000, which has been treated with the reversibly photoswitchable fluorescent protein RSFP, is placed on a stage of the sample placement and movement module 900. According to the technical solution of the present disclosure, the sample placement and movement module 900 may be configured to translate in three-dimensional directions as needed. In FIG. 4, for clarity of presentation, a three-dimensional Cartesian coordinate system is established, where an x-axis is perpendicular to a paper plane or a screen plane, a y-axis is parallel to an optical axis direction of the activation objective lens 500, and a z-axis is parallel to an optical axis direction of the detection objective lens 700.

First, after the activation objective lens 500 emits a single Bessel beam or a multi-beam interference lattice of the activation wavelength, an activation light sheet is formed via dithering of the first galvanometer Galvo1. The activation light sheet is mainly located in a plane parallel to an xy-plane and is incident onto the biological sample 1000, thereby activating a portion of the RSFP in the biological sample 1000 illuminated by the activation light sheet. Therefore, it may be considered that the incidence of the activation light sheet on the biological sample 1000 is a planar incidence.

For example, the emission of the single Bessel beam or the multi-beam interference lattice of the activation wavelength from the activation objective lens 500 may be achieved in such a way that the acousto-optic tunable filter AOTF of the laser gating and beam splitting module 200 of the super-resolution light-sheet microscopy imaging system shown in FIG. 2 is controlled to allow only the 405 nm collimated laser beam to pass, and the spatial light modulator SLM is controlled to allow only the light-sheet activation optical path to be conducted. Thus, as previously described, the collimated laser beam of the activation wavelength, after passing through the light-sheet activation optical path, exits from the activation objective lens 500 in the form of a single Bessel beam or a multi-beam interference lattice. With the operation of the light-sheet generation module 300 (the dithering of the first galvanometer Galvol), an activation light sheet is generated.

After generating the activation light sheet to illuminate the biological sample 1000 to activate the reversibly photoswitchable fluorescent protein RSFP, a modulated fringe structured light of the excitation wavelength emitted from the detection objective lens 700 illuminates the activated portion of the reversibly photoswitchable fluorescent protein RSFP in the biological sample 1000, so that this portion is excited to produce fluorescence. The fluorescence is then collected and imaged by the fluorescence detection objective lens 700 via the fluorescence detection module 800. This process may be referred to as fluorescence detection of the reversibly photoswitchable fluorescent protein RSFP.

Taking the mask mask2 forming 6 through-holes as an example, according to optical principles, these 6 through-holes may form three groups of through-hole pairs, with an included angle of 180°/3 (i.e., 60°) between each group. Each pair of through-holes is radially aligned with each other.

Each time after the reversibly photoswitchable fluorescent protein RSFP has been activated by the activation light sheet and before being illuminated with excitation light, by controlling two laser beams emitted from the spatial light modulator SLM configured to form the fringe structured light to pass through different groups of through-hole pairs among the three groups of through-hole pairs in the mask mask2, three fluorescence images containing different fringe directions may be obtained for a same plane (e.g., parallel to the xy-plane) activated by the reversibly photoswitchable fluorescent protein RSFP (for example, corresponding to three fluorescence images with different fringe directions shown in a lower part of FIG. 5). For conventional fringe structured light excitation, if the fringe information does not contain high-frequency information, only a linear super-resolution reconstruction algorithm is used to process the fluorescence image. In this case, for each fringe direction, the spatial light modulator SLM is controlled to generate three fringe structured light with different fringe phases as excitation light for irradiation, and three fluorescence images are obtained (each fluorescence image carries fringe information with a different phase). Therefore, a total of nine fluorescence images with fringe information may be obtained. The phase difference between the fringe phases is the same, which is 2π/3; and a difference between different fringe directions is also the same, which is 180°/3 (i.e., 60°). The fringe information carried by these fluorescence images, after post-processing with two-dimensional super-resolution image processing, may significantly enhance an isotropic lateral resolution of the final image.

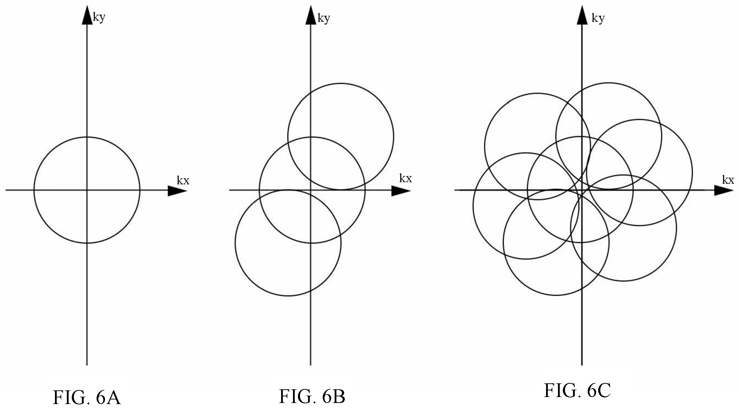

FIGS. 6A, 6B, and 6C schematically show frequency spectrum comparison diagrams of traditional wide-field illumination and an excitation structured light fringe of a super-resolution light-sheet fluorescence microscopy imaging method according to an embodiment of the present disclosure. In FIG. 6A, a frequency spectrum diagram of fluorescence image information under traditional wide-field illumination is schematically shown, in which wide-field means that the mask mask2 shown in FIG. 2 is replaced by a mask with a central circular hole, and the central circular hole of this mask is located on an optical axis. FIG. 6B schematically shows a frequency spectrum diagram of a fluorescence image containing three-phase information in one direction. FIG. 6C schematically shows a frequency spectrum diagram of a fluorescence image containing three-phase information in three directions, in which these three directions correspond to three groups of through-hole pairs in the mask mask2. Comparing FIG. 6C with FIG. 6A, since an overlapping portion of frequency domain information increases, it is evident that the super-resolution light-sheet fluorescence microscopy imaging method of the present disclosure has more advantages in improving the resolution of the final super-resolution image of the biological sample 1000.

It should be clear that since the fluorescence image corresponding to three fringe directions and three fringe phases need to be obtained for a same activated plane of the reversibly photoswitchable fluorescent protein RSFP, that is, the reversibly photoswitchable fluorescent protein RSFP needs to be activated and excited nine times, when the activated plane of the reversibly photoswitchable fluorescent protein RSFP has been excited by a excitation structured light fringe to produce fluorescence, a portion of the reversibly photoswitchable fluorescent protein RSFP that produces fluorescence in this plane will be in the dark state, but a portion not illuminated by the excitation structured light fringe will still be in the activated state. Therefore, to ensure that a clear fluorescence image may continue to be obtained for the same plane after a fluorescence image corresponding to a certain direction and phase has been acquired, after the excitation structured light fringe illuminates this plane, it is necessary to illuminate this plane again with an excitation structured light fringe of a same direction but with a phase difference of π relative to the previous excitation structured light fringe, so as to ensure that the entire plane is in the dark state, thereby preparing for the next activation and excitation of this plane, and avoiding residual activated RSFP fringes from affecting the quality of fluorescence images in other directions.

Although using a linear super-resolution reconstruction algorithm to reconstruct fluorescence images corresponding to three fringe directions and three fringe phases is sufficient to obtain satisfactory super-resolution reconstructed images, super-resolution reconstructed image results may also be obtained by using fluorescence images with more directions and phases with a linear super-resolution reconstruction algorithm.

Therefore, for using a linear super-resolution reconstruction algorithm for post-fluorescence image reconstruction, for each portion of the reversibly photoswitchable fluorescent protein RSFP to be activated and excited, a modulated fringe structured light as excitation light may be incident N*M times, where N and M are integers greater than or equal to 3. The modulated fringe structured light incident each time has fringe directions differing by 180/M degrees when viewed in a plane where the activation light sheet is located, and fringe phases differing by 2π/N. In this case, the mask mask2 is correspondingly configured to have 2M through-holes, these through-holes form M groups of through-hole pairs, each pair of through-hole is radially symmetrical, and there is a difference of 360°/2M degrees between groups.

Limited by the principle of linear structured light imaging, the super-resolution light-sheet fluorescence microscopy imaging shown in FIGS. 5 and 6C is a linear two-dimensional super-resolution fluorescence microscopy imaging. However, based on principles well-known to those skilled in the art, if the fringe structured light as excitation light may induce a saturation effect in the fluorescent proteins, and a fluorescence emission intensity is nonlinearly positively correlated with an excitation light intensity, the acquired information-carrying fringes will be narrower, and thus higher-frequency fringe information will be included in the acquired fluorescence image. For such fluorescence image containing high-frequency information, a nonlinear super-resolution reconstruction algorithm may be further applied to obtain super-resolution images with better resolution.

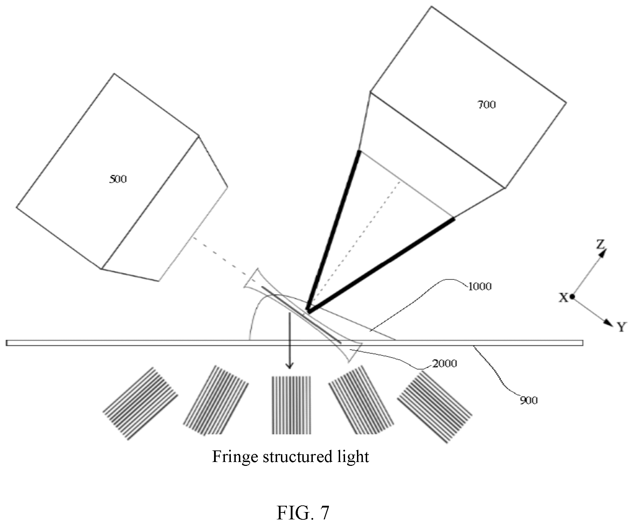

FIG. 7 schematically shows a schematic diagram of performing super-resolution light-sheet fluorescence microscopy imaging on a biological sample according to another embodiment of the present disclosure. For example, this method may be implemented using the super-resolution light-sheet fluorescence microscopy imaging system described above. The following only describes the differences between this method and the one shown in FIG. 5, while other identical content may be referred to the description of the above method embodiments.

In an embodiment shown in FIG. 7, the fringe structured light as the excitation light induces a saturation effect in the fluorescent proteins, which results in narrower acquired information-carrying fringes and thus higher-frequency fringe information being included in the obtained fluorescence image. Therefore, the obtained fluorescence image may carry higher-frequency fringe information. The energy requirement for excitation light to excite high-frequency fluorescence information depends on the physical or chemical properties of the RSFP and thus is not exemplarily described herein. Those skilled in the art, based on the characteristics of the RSFP, should be able to understand that what intensity of energy the excitation light needs to reach to may excite the high-frequency fluorescence information.

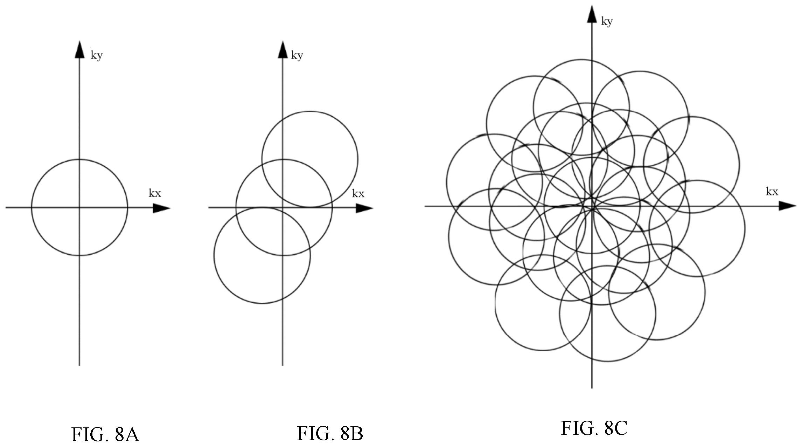

Furthermore, in the embodiment shown in FIG. 7, at least twenty-five fluorescence images need to be obtained for a same activated plane of the reversibly photoswitchable fluorescent protein RSFP (parallel to the xy-plane) (for example, fluorescence images for five fringe directions at a certain phase are shown in a lower part of FIG. 7), and each fluorescence image carries fringe information for one fringe direction and one fringe phase. Therefore, 10 through-holes are formed in the mask mask2, the 10 through-holes form five groups of through-hole pairs, and each pair of through-holes radially aligned is radially aligned with each other. FIGS. 8A, 8B, and 8C schematically show frequency spectrum comparison diagrams of traditional wide-field illumination and an excitation structured light fringe of a super-resolution light-sheet fluorescence microscopy imaging method according to an embodiment of the present disclosure. In FIG. 8A, a frequency spectrum diagram of traditional wide-field illumination is schematically shown. FIG. 8B schematically shows a frequency spectrum diagram of a fluorescence image containing five-phase information in one direction. FIG. 8C schematically shows a frequency spectrum diagram of a fluorescence image containing five-phase information in five directions, in which these five directions correspond to five groups of through-hole pairs in the mask mask2. Comparing FIG. 8C with FIG. 8A, due to the expansion of the frequency spectrum, it is evident that the super-resolution light-sheet fluorescence microscopy imaging method of the present disclosure has more advantages in improving the resolution of the final super-resolution image of the biological sample 1000. Moreover, comparing FIG. 8C with FIG. 6C, since more high-frequency information is collected in the frequency domain, and more details in the fluorescence image is reflected, the fluorescence image represented by the frequency spectrum diagram shown in FIG. 8C, after processed with a nonlinear super-resolution reconstruction algorithm, will inevitably produce a super-resolution image with better resolution than a linear structured light imaging.

Therefore, for using a nonlinear super-resolution reconstruction algorithm for post-fluorescence image reconstruction, for each portion of the reversibly photoswitchable fluorescent protein RSFP to be activated and excited, a modulated fringe structured light as excitation light may be incident N*M times, where N and M are integers greater than or equal to 5. The modulated fringe structured light incident each time has fringe directions differing by 180/M degrees when viewed in a plane where the activation light sheet is located, and fringe phases differing by 2π/N.

The laser Lₙᵣ of the second light-sheet generation module 110 is configured to emit a laser beam capable of inducing a two-photon effect in the reversibly photoswitchable fluorescent protein RSFP. In embodiments of the present disclosure, since the wavelength of the activation light for the reversibly photoswitchable fluorescent protein RSFP is selected as 405 nm, a wavelength of an activation light capable of inducing a two-photon effect in the reversibly photoswitchable fluorescent protein RSFP is selected as 780 nm. Those skilled in the art understand that the wavelength of the activation light for inducing a two-photon effect in the fluorescent proteins is basically in a near-infrared band. Therefore, the second light-sheet generation module 110 may also be referred to as a near-infrared light-sheet generation module 110.

Taking FIG. 2 as an example, firstly, the configuration of the acousto-optic tunable filter (denoted as AOTF) and the spatial light modulator (denoted as SLM) in the light sheet generation module 300 ensures that no activation light is generated in the first light-sheet activation optical path. Then, in the second light sheet activation optical path, when a collimated laser beam with a wavelength of 780 nm generated by the laser Lₙᵣ passes through the axicon Axicon and the lens L118, a parallel annular light beam is generated. The parallel annular beam passes through the first galvanometer Galvo1 of the light sheet generation module 300 and the light sheet scanning module 400, due to a conjugate design between the back focal plane of the axicon Axicon and the focal plane of the activation objective lens 500, a Bessel beam may be emitted from the activation objective lens 500. The Bessel beam forms an activation light sheet via dithering of the first galvanometer Galvo1. By adjusting a power of the laser Lₙᵣ, an energy of this activation light sheet may be strong enough to induce a two-photon effect in the reversibly photoswitchable fluorescent protein RSFP. Compared to a laser in a visible wavelength range, a laser in a near-infrared wavelength range is configured to generate the activation light sheet, which results in an increased depth of the activated portion in the reversibly photoswitchable fluorescent protein RSFP and reduced damage to the biological sample. In addition to using a two-photon effect to generate the activation light sheet, the content related to the structured illumination excitation and detection optical path may be referenced with the previously described embodiments.

The above embodiments mainly relate to two-dimensional super-resolution light-sheet fluorescence microscopy imaging (e.g., two-dimensional super-resolution light sheet fluorescence microscopy imaging in a plane parallel to the xy-plane). When the activation light sheet moves at intervals along a z-axis direction, by continuously repeating the above linear or nonlinear two-dimensional super-resolution light-sheet fluorescence microscopy method to a portion of the reversibly photoswitchable fluorescent protein RSFP activated by the activation light sheet at each z-axis position, a fluorescence image stack that reflects a three-dimensional characteristic of the biological sample may be obtained. In the fluorescence image stack, each two-dimensional image at each z-axis position may achieve a super-resolution effect through a super-resolution reconstruction algorithm. It should be noted that when imaging is performed using the super-resolution light sheet fluorescence microscopy imaging system of the present disclosure, a relative position between the biological sample and the activation light sheet may be changed along the optical axis of the detection objective lens 700 or along the z-axis in the following two ways: (1) rotating the second galvanometer Galvo2 to move the activation light sheet along the optical axis of the detection objective lens 700, while simultaneously moving the detection objective lens 700 synchronously along its optical axis to ensure focusing; and (2) keeping the activation light sheet stationary while moving the biological sample 1000 using the sample placement and movement module 900.

To improve a z-axis resolution of the three-dimensional fluorescence image stack (i.e., resolution along the optical axis of the detection objective lens 700), it is necessary to minimize the thickness of the activated portion of the reversibly photoswitchable fluorescent protein RSFP illuminated by the activation light sheet each time.

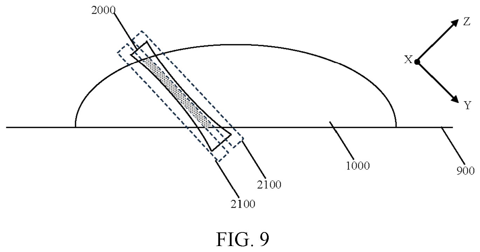

FIG. 9 schematically illustrates a method for thinning the activated portion of the reversibly photoswitchable fluorescent protein RSFP illuminated by the activation light sheet according to an embodiment of the present disclosure.

As shown in the figures, the activation light sheet (as shown by a solid frame 2000) is first configured to illuminate the reversibly photoswitchable fluorescent protein RSFP in the biological sample 1000 to generate the activated portion. Then, a laser beam with an excitation wavelength is configured to form a light sheet for thinning (as shown by a dashed frame 2100), which illuminates both sides of the activated portion of the reversibly photoswitchable fluorescent protein RSFP in the biological sample 1000 along a thickness direction. Each illuminated area partially overlaps with the activated portion. As a result, the overlapping portion transitions from the bright state to the dark state after being illuminated by the light with the excitation wavelength, while the activated portion of the reversibly photoswitchable fluorescent protein RSFP that does not overlap with the light sheet for thinning remains in the activated state and is significantly thinned, as shown in the figures. Therefore, subsequently, using the content introduced for the structured illumination excitation and detection optical path, the activated portion of the RSFP that has been thinned and is in the activated state may be illuminated again with fringe structured light as the excitation light to induce fluorescence, and fluorescence images with fringe information may be obtained accordingly.

In an embodiment shown in FIG. 9, the generation of the activation light sheet may refer to the descriptions related to FIGS. 2, 5, and 7, which includes generating the activation light sheet for planar incidence on the biological sample by dithering a single Bessel beam or a multi-beam interference lattice with the activation wavelength, or dithering a single Bessel beam lattice with a wavelength capable of inducing a two-photon effect in the reversibly photoswitchable fluorescent proteins RSFP.

Taking the super-resolution light-sheet fluorescence microscopy imaging system shown in FIG. 2 as an example, when generating the light sheet for thinning, the acousto-optic tunable filter (denoted as AOTF) of the laser gating and beam-splitting module 200 is controlled to allow only a collimated laser beam with 488 nm (excitation wavelength) to pass through, and the spatial light modulator (denoted as SLM) in the structured illumination excitation and detection optical path (or, in an alternative embodiment, a digital micromirror device (denoted as DMD) configured to replace the spatial light modulator SLM) is configured so that the structured illumination excitation and detection optical path is not conducted. Thus, the first light-sheet generation optical path generates the light sheet for thinning (as shown by the dashed frame 2100 in FIG. 9) to illuminate both sides of the portion of the RSFP illuminated by the activation light sheet in a partially overlapping manner, so that the overlapping portion is pre-excited to emit fluorescence and subsequently transitions to a non-activated state, i.e., the dark state, thus thinning a thickness (along the z-axis, i.e., along the optical axis of the detection objective lens 700) of the portion of the reversibly photoswitchable fluorescent protein RSFP activated by the activation light sheet. Subsequently, the excitation structured light fringes generated by the structured illumination excitation and detection optical path are used to illuminate the thinned activated portion of the reversibly photoswitchable fluorescent protein RSFP (as shown by a shaded area in FIG. 9), thereby obtaining an excitation fluorescence image. Using the obtained fluorescence image stack, a super-resolution image reflecting a three-dimensional characteristic of the biological sample may be obtained through a reconstruction algorithm. In the z-axis direction, a super-resolution effect may be achieved because the activated portion of the reversibly photoswitchable fluorescent protein RSFP is further thinned. Those skilled in the art will understand that the content related to generating the excitation structured light fringe in the structured illumination excitation and detection optical path to obtain the fluorescence images may be implemented with reference to the descriptions provided in the preceding embodiments.

In an alternative embodiment, the light sheet for thinning may also be generated by controlling a specific pattern produced by the spatial light modulator SLM, in any manner known to those skilled in the art. Those skilled in the art should understand that the spatial light modulator SLM may also be replaced by other suitable optical devices such as a digital micromirror device (denoted as DMD).

Those skilled in the art should understand that the change in a position of the light sheet for thinning along the optical axis of the detection objective lens 700 or along the z-axis may be achieved in the following two ways: (1) rotating the second galvanometer Galvo2 to move the light sheet along the optical axis of the detection objective lens 700, while simultaneously moving the detection objective lens 700 synchronously along its optical axis to ensure focusing; and (2) keeping the light sheet for thinning stationary while moving the biological sample 1000 using the sample placement and movement module 900.

Although specific embodiments of the present disclosure are described in detail herein, they are provided merely for illustrative purposes and should not be construed as limiting the scope of the present disclosure. Furthermore, those skilled in the art should understand that various embodiments described in this specification may be used in combination with each other. Various substitutions, modifications, and alterations may be conceived without departing from the spirit and scope of the present disclosure.

## Claims

1. A super-resolution light-sheet fluorescence microscopy imaging method, comprising:
treating a biological sample (1000) to be tested using a reversibly photoswitchable fluorescent protein (RSFP);
causing a light sheet as an activation light plane to be incident on the biological sample (1000) to be tested in a planar manner, so as to generate an activated portion in the reversibly photoswitchable fluorescent protein (RSFP) of the biological sample (1000) to be tested;
causing modulated fringe structured light as excitation light to be incident on the activated portion of the reversibly photoswitchable fluorescent protein (RSFP) towards a plane where the activated portion is located, so that the activated portion of the reversibly photoswitchable fluorescent protein (RSFP) emits fluorescence on a plane where the light sheet is incident, wherein the activation light and the excitation light have different wavelengths; and
acquiring a fluorescence image carrying structured light fringe information as a two-dimensional fluorescence image for super-resolution image processing.

2. The method according to claim 1, wherein, when a linear super-resolution reconstruction algorithm is to be configured for super-resolution image reconstruction, for each portion of the reversibly photoswitchable fluorescent protein (RSFP) to be activated illuminated by the activation light sheet, the activation light sheet is first incident, and then the modulated fringe structured light is incident N*M times, wherein N and M are integers greater than or equal to 3; and the modulated fringe structured light incident each time differs from one another by 180/M degrees in fringe directions when viewed in a plane where the light sheet is located and by 2π/N in fringe phases.

3. The method according to claim 2, wherein, after the modulated fringe structured light is incident as the excitation light onto the activated portion of the reversibly photoswitchable fluorescent protein (RSFP) each time, fringe structured light having a same direction but a phase difference of π relative to the incident modulated fringe structured light is incident as the excitation light onto the activated portion of the reversibly photoswitchable fluorescent protein (RSFP).

4. The method according to claim 2 or 3, wherein, when a nonlinear super-resolution reconstruction algorithm is to be configured for super-resolution image reconstruction, N and M are both greater than or equal to 5.

5. The method according to claim 1, 2, 3, or 4, wherein the light sheet is formed by dithering a single Bessel beam or a multi-beam interference lattice.

6. The method according to claim 5, wherein the light sheet generated using a near-infrared wavelength single Bessel beam is used as the activation light, and is incident on the biological sample in a manner that induces a two-photon effect in the reversibly photoswitchable fluorescent protein (RSFP).

7. The method according to claim 5 or 6, wherein, after the light sheet as the activation light has been incident on the biological sample (1000) and before the modulated fringe structured light as the excitation light is incident on the activated portion of the reversibly photoswitchable fluorescent protein (RSFP), a light sheet for thinning formed by light having an excitation light wavelength is configured to illuminate both sides of the activated portion in a partially overlapping manner, so as to reduce a thickness of the activated portion.

8. The method according to any one of claims 1 to 7, wherein a relative position between the light sheet as the activation light and the biological sample is changed at least in a direction perpendicular to a plane where the light sheet is located, the modulated fringe structured light as the excitation light is incident on the activated portion of the reversibly photoswitchable fluorescent protein (RSFP) to excite fluorescence, and a fluorescence image carrying structured light fringe information is acquired as a three-dimensional fluorescence image stack for super-resolution image processing.

9. The method according to claim 8, wherein the change in the relative position between the light sheet and the biological sample is achieved by moving the light sheet itself or by moving the biological sample (1000).

10. A super-resolution light-sheet fluorescence microscopy imaging system, comprising:
a light source module (100);
a laser gating and beam-splitting module (200);
a first light-sheet generation module (300);
a light-sheet scanning module (400);
an activation objective lens (500);
a structured light generation and polarization modulation module (600);
a detection objective lens (700);
a fluorescence detection module (800); and
a sample placement and movement module (900),
wherein the first light-sheet generation module (300), the light-sheet scanning module (400), and the activation objective lens (500) form a first light-sheet activation optical path; the structured light generation and polarization modulation module (600), the fluorescence detection module (800), and the detection objective lens (700) form a structured light excitation and detection optical path; and the laser gating and beam-splitting module (200) is configured to selectively direct a laser beam emitted from the light source module (100) into the first light-sheet activation optical path or the structured light excitation and detection optical path;
the first light-sheet activation optical path is configured to generate a light sheet as activation light incident on a biological sample (1000) to be tested treated with a reversibly photoswitchable fluorescent protein (RSFP), so as to generate an activated portion in the reversibly photoswitchable fluorescent protein (RSFP);
the structured light excitation and detection optical path is configured to generate modulated fringe structured light as excitation light incident on the activated portion of the reversibly photoswitchable fluorescent protein (RSFP), so that the activated portion of the reversibly photoswitchable fluorescent protein (RSFP) emits fluorescence on a plane where the light sheet is incident, wherein the activation light and the excitation light have different wavelengths; and
the structured light excitation and detection optical path is further configured to acquire a fluorescence image carrying structured light fringe information as a two-dimensional fluorescence image for super-resolution image processing.

11. The system according to claim 10, wherein, when a linear super-resolution reconstruction algorithm is to be used for super-resolution image reconstruction, for each portion of the reversibly photoswitchable fluorescent protein (RSFP) to be activated by the incident activation light sheet, the activation light sheet is first incident, and then the modulated fringe structured light is incident N*M times, wherein N and M are integers greater than or equal to 3; and the modulated fringe structured light incident each time differs from one another by 180/M degrees in fringe directions when viewed in a plane where the light sheet is located and by 2π/N in fringe phases.

12. The system according to claim 11, wherein, after the modulated fringe structured light is incident as the excitation light onto the activated portion of the reversibly photoswitchable fluorescent protein (RSFP) each time, fringe structured light having a same direction but a phase difference of π relative to the incident modulated fringe structured light is incident as the excitation light onto the activated portion of the reversibly photoswitchable fluorescent protein (RSFP).

13. The system according to claim 11 or 12, wherein, when a nonlinear super-resolution reconstruction algorithm is to be configured for super-resolution image reconstruction, N and M are greater than or equal to 5.

14. The system according to claim 10, 11, 12, or 13, wherein the first light-sheet generation module (300) comprises a first galvanometer (Galvo1), and the light sheet is formed by dithering a single Bessel beam or a multi-beam interference lattice via the first galvanometer (Galvo1).

15. The system according to claim 14, further comprising:
a second light-sheet generation module (110) capable of emitting a laser beam independently of the light source module (100),
wherein the second light-sheet generation module (110), the first galvanometer (Galvo1) of the first light-sheet generation module (300), the light-sheet scanning module (400), and the activation objective lens (500) form a second light-sheet activation optical path;
the second light-sheet generation module (110) comprises:
a laser (Lₙᵣ) capable of generating near-infrared wavelength laser light independently of the light source module (100);
a pair of lenses (L16, L17) located downstream of the laser (Lₙᵣ); and
a sub-module consisting of an axicon (Axicon) and a lens (L118) or an annular mask (Am), wherein the sub-module or the annular mask (Am) is located downstream of the pair of lenses (L16, L17) and configured so that after the laser (Lₙᵣ) emits near-infrared wavelength laser light, the near-infrared wavelength laser light is first collimated and expanded by the pair of lenses (L16, L17) and then passes through the sub-module or the annular mask (Am) to produce an annular beam, and the annular beam forms a single Bessel beam after passing through the activation objective lens, while the single Bessel beam generates a light sheet via dithering of a first galvanometer (Galvo1) of the first light-sheet generation module (300) as the activation light incident on the biological sample in a manner that induces a two-photon effect in the reversibly photoswitchable fluorescent protein (RSFP).

16. The system according to claim 15, wherein, after the light sheet as the activation light has been incident on the biological sample (1000) and before the fringe structured light as the excitation light is incident on the activated portion of the reversibly photoswitchable fluorescent protein (RSFP), a light sheet for thinning formed by light with an excitation light wavelength is configured to illuminate both sides of the activated portion in a partially overlapping manner, so as to reduce a thickness of the activated portion.

17. The system according to any one of claims 10 to 16, wherein a relative position between the light sheet as the activation light and the biological sample is changed at least along an optical axis of the detection objective lens (700), the modulated fringe structured light as the excitation light is incident on the activated portion of the reversibly photoswitchable fluorescent protein (RSFP) to excite fluorescence, and a fluorescence image carrying structured light fringe information is acquired as a three-dimensional fluorescence image stack for super-resolution image processing.

18. The system according to claim 17, wherein the light-sheet scanning module (400) is configured to shift only the light sheet as the activation light and move the detection objective lens synchronously along the optical axis, or to move only the sample placement and movement module (900), so as to change the relative position between the light sheet and the biological sample at least along the optical axis of the detection objective lens (700).
